# EUROPEAN PATENT SPECIFICATION

(11) **EP 2 758 607 B1**
(45) Date of publication and mention of the grant of the patent: **07.08.2019**
(21) Application number: 12824539.6
(22) Date of filing: 17.08.2012
(51) Int. Cl.: E03C 1/266, B04B 7/16, B09B 3/00, B01D 33/46, B01D 33/52, B01D 33/76

(54) **ORGANIC WASTE LIQUID SOLID SEPARATOR**
ORGANISCHER FLÜSSIGKEITS-/FESTSTOFFSEPARATOR FÜR ABFÄLLE
SÉPARATEUR LIQUIDE-SOLIDE POUR DÉCHETS ORGANIQUES

(30) Priority: 18.08.2011 US 201161524955 P
(43) Date of publication of application: 30.07.2014
(73) Proprietor: OrgAmi, LLC, Raleigh, North Carolina 27608 (US)
(72) Inventor: DORSETT, Josephine Scott, Raleigh, North Carolina 27608 (US); WHITE, James E., Trent Woods, North Carolina 28562 (US)
(74) Representative: HGF Limited
(86) International application number: PCT/US2012/051320
(87) International publication number: WO 2013/025980

(56) References cited:
- GB-A- 286 855
- JP-A- 2010 058 055
- KR-A- 20070 038 082
- KR-A- 20080 061 216
- KR-A- 20090 079 475
- KR-U- 20070 000 429

## Description

### 1 Field of the Invention

The invention relates to a system and apparatus for collecting mixed waste material, such as organic waste, and separating the mixed waste into liquids and solids. More specifically, the invention relates to a system and apparatus that collects mixed organic waste, such as organic kitchen waste, in a clean and easily transportable form, thereby removing it from the water supply and allowing its reuse as compost/fertilizer, biofuel, or any other manner in which organic material can be utilized.

### 2 Background of the Invention

As the world's population continues to grow, that population has begun to encroach upon available natural resources, and has caused significant damage to the environment. Many different organizations and governments have begun to focus on preserving such resources and limiting damage to the environment. Some of the many approaches adopted involve promoting recycling and protection of natural water resources.

It has become especially important to preserve water resources and protect water quality given recent extensive droughts throughout different portions of the world. One area of interest is the effect of organic waste, such as organic kitchen waste, on the water supply. More specifically, current city sewer systems make it easy to introduce such waste into the water supply system, both because a significant amount of organic liquid kitchen waste flows directly into the municipal water supply, and because such sewer systems permit city residents to install disposals in their sinks, allowing the introduction of solid organic waste directly into the water supply.

Accordingly, what is needed is a way to collect and separate liquid from solid organic waste, such as organic kitchen waste, and recycle it and reduce its introduction into the water supply, for example as currently occurs as a result of using waste disposal units (garbage disposals); and from municipal landfills as currently occurs through the conventional trash removal system. What is further needed is the ability to cleanly and easily collect and reuse such waste, for example, as compost/fertilizer, biofuel, or any other manner in which organic waste material can be utilized.

GB 286855A discloses apparatus for the treatment of sludge of various descriptions providing apparatus of the centrifugal type to separate the water or liquid from solids.

KR 2007 0038082A discloses a dehydrating method and device for food garbage.

KR 2009 0079475A discloses a food garbage decomposing disposal apparatus.

### 3 Brief Description of the Invention

The invention provides, in one embodiment, an apparatus as claimed in claim 1.

The front plate may be connected to the inlet pipe such that it is perpendicular to a central axis of the opening at the bottom portion of the inlet pipe. The drum strainer may be connected to the spindle assembly by a drum bracket, wherein the drum bracket may be operatively associated with one or more rotational bearings to allow rotational movement of the drum strainer about a shaft of the spindle assembly. The apparatus may further include a rotational motor and a gear assembly, wherein the gear assembly is operatively connected to the drum bracket, and the rotational motor is operatively connected to the gear assembly to impart rotational movement to the gear assembly causing the drum bracket and drum strainer to rotate. The apparatus may further include a motor configured to impart linear movement, the motor operatively connected to the spindle assembly to impart linear movement to at least the drum strainer and spindle assembly along the spindle assembly shaft. The spindle shaft, scraper plate, front plate and inlet pipe are preferably substantially stationary during operation of the apparatus. The apparatus may further include a liquid waste discharge hose connected to the shroud. The apparatus may further include a discharge door positioned below the strainer drum, wherein the discharge door is operatively connected to the spindle assembly such that the spindle assembly may cause the discharge door to move in the same linear direction with the drum strainer. The strainer drum preferably rotates at a sufficient rate to substantially separate liquid waste material from solid waste material, and the liquid waste is caused to be discharged through a plurality of openings in the strainer drum, wherein the liquid waste is constrained and directed by the shroud to the liquid waste discharge hose, and wherein the solid waste is caused to be discharged from the strainer drum interior region via a scrapping action of the scraper plate. The face plate and scraper plate have a slightly smaller diameter than an internal diameter of the drum strainer. A front portion and back portion of the drum strainer preferably overlaps at least a portion of a perimeter edge of the face plate and the scraper plate respectively. The scraper plate may be held stationary as the drum strainer moves and may be operative to perform a scraping action to move accumulated solid waste from an interior of the drum strainer. The rotational rate of the drum strainer may be in the range of about 70 to about 80 revolutions per minute, and may be in the range of about 74 to about 75 rpm. The spindle assembly and spindle assembly shaft are operatively engaged with one or more axial bearings to facilitate the liner movement of the spindle assembly along the spindle assembly shaft. The opening at the top portion of the inlet pipe may be connected to a sink. The apparatus further may include a valve positioned in the inlet pipe upper portion in proximity to the connection of the inlet pipe to the sink. The valve may be a ball valve, and may either be a manual or automatic valve. The apparatus further may include a solid waste collector positioned below the drum strainer and is configured to collect solid waste discharged from the strainer drum interior region. The solid waste collector may include a manual pod bagger. The manual pod bagger may include a continuous open sleeve of material and a sleeve tube, wherein the continuous open sleeve of material may be accumulated in the sleeve tube. The solid waste collector may include an automatic pod bagger. The automatic pod bagger may include a continuous open sleeve of material; a sleeve tube, wherein the continuous open sleeve of material is accumulated in the sleeve tube; a sleeve advancement clamp operatively associated with and positioned below sleeve tube and configured to engage a portion of the continuous open sleeve of material to advance a defined length of continuous open sleeve of material from the sleeve tube; an upper sealer; a lower sealer; and a cutter, wherein the upper sealer, lower sealer, and cutter are in operative association with and positioned above the sleeve advancement clamp, and wherein the upper sealer is positioned below the lower sealer and the cutter is located between the upper sealer and the lower sealer, and wherein the upper sealer, lower sealer, and cutter comprise an assembly.

The invention provides, in another embodiment, a system for separating mixed waste material into liquid and solid components. The system may include a housing; a solid liquid separator housed in an interior region of the housing; a solid waste wrap and seal compartment housed in the interior region of the housing and positioned below the solid liquid separator, wherein the solid waste wrap and seal compartment is configured to collect and seal solid waste material separated out from the solid liquid separator; and a solid waste receptacle housed in the interior region of the housing and positioned below the solid waste wrap and seal compartment, wherein the solid waste receptacle is configured to collect sealed solid waste material from the solid waste wrap and seal compartment. The solid liquid separator may include an inlet pipe having openings at a bottom portion and top portion thereof; a front plate having an opening, wherein the front plate is connected to the inlet pipe at the inlet pipe opening, such that the front plate opening and the opening at the bottom portion of the inlet pipe align; a spindle assembly operatively connected to the drum strainer, wherein the spindle assembly facilitates the rotational and linear movement of the drum strainer; a scraper plate fixed to an end portion of a shaft of the spindle assembly; a shroud connected to the spindle assembly, wherein the shroud is spaced apart from and substantially covers the exterior surface of the drum strainer; and wherein the drum strainer may be positioned between the front plate and scraper plate.

The system may further include a lid, wherein the lid provides access to the opening at the top portion of the inlet pipe. The housing may further include a liquid waste container fluidly connected to the liquid waste discharge hose. The housing may further include a solid waste receptacle housing, wherein the solid waste receptacle may be house therein. The liquid waste container may further include a liquid level indicator.

### 4 Brief Description of the Drawings

**Figure 1** illustrates a solid liquid separator consistent with certain embodiments of the invention;
**Figure 2** illustrates a cross-sectional view of a solid liquid separator consistent with certain embodiments of the invention;
**Figure 3A** illustrates a waste catch basin attached to a solid liquid separator consistent with certain embodiments of the invention;
**Figure 3B** illustrates a manual pod bagger attached to a solid liquid separator consistent with certain embodiments of the invention;
**Figure 3C** illustrates an automatic pod bagger attached to a solid liquid separator consistent with certain embodiments of the invention;
**Figure 4A** illustrates an interior view of a standalone system with a solid liquid separator, manual pod bagger, and pod receptacle consistent with certain embodiments of the invention;
**Figure 4B** illustrates an interior view of a standalone system with a solid liquid separator, an automatic pod bagger, and pod receptacle consistent with certain embodiments of the invention;
**Figure 5A** illustrates a stand-alone organic waste wrap and removal apparatus with a pod receptacle consistent with certain embodiments of the invention;
**Figure 5B** illustrates an interior view of a stand-alone mixed waste wrap and removal apparatus with manual pod bagger and pod receptacle consistent with certain embodiments of the invention; and
**Figure 5C** illustrates an interior view of a stand-alone mixed waste wrap and removal apparatus with an automatic pod bagger and pod receptacle consistent with certain embodiments of the invention.

### 5 Detailed Description of the Invention

The present invention discloses a system and apparatus for the separation of liquid and solid mixed waste, such as organic waste, for example, organic kitchen waste/scraps. The system may incorporate a device with a sink, such as a kitchen sink, or other waste disposal device used to dispose of mixed waste including any debris having both solid and liquid components, or may be a stand-alone system.

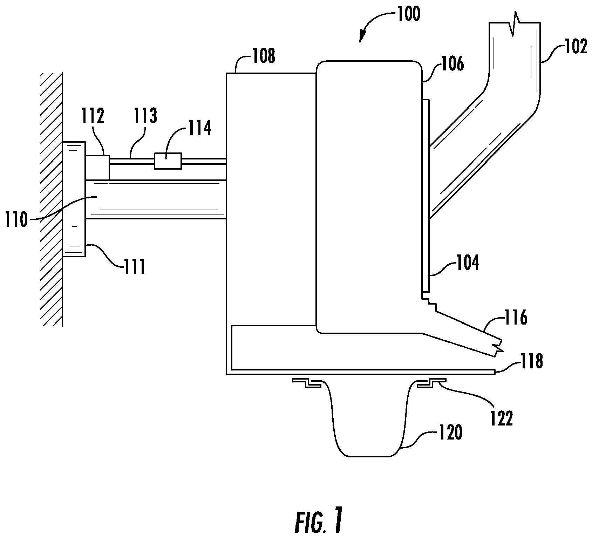

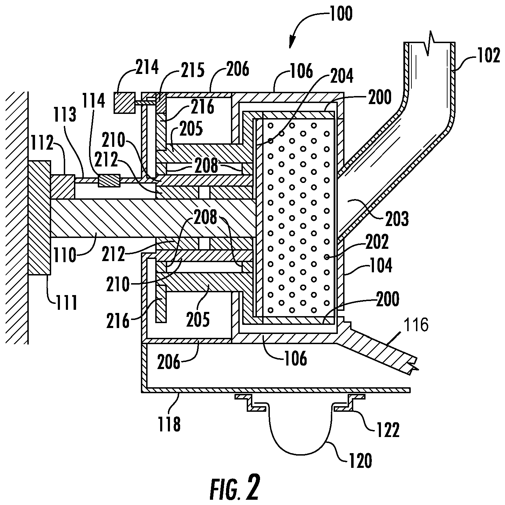

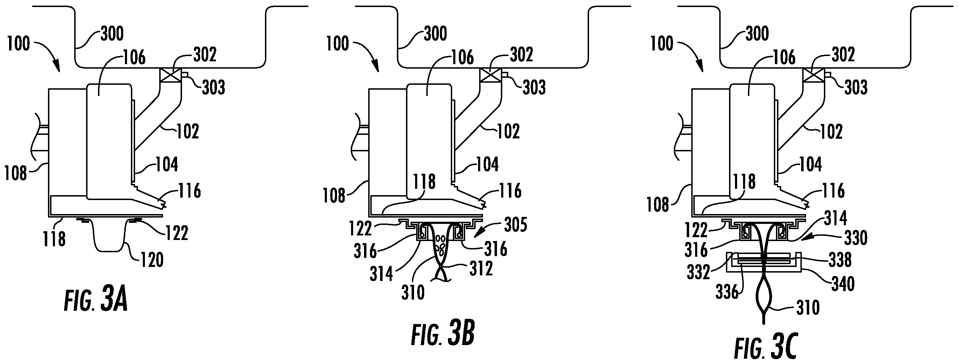

**Figure 1** illustrates a solid liquid separator 100 for the separation of liquid and solid waste materials, such as organic waste material, consistent with certain embodiments of the invention. In this exemplary embodiment the solid liquid separator 100 accepts mixed solid and liquid waste, for example, organic waste, such as food, other mixed organic kitchen debris, organic debris from a household or commercial kitchen operation, or any mixture of solid and liquid waste, and separates the solid waste material from the liquid waste material, such that the solid and liquid waste material may be individually collected, recycled, composted, or otherwise disposed of in a more ecologically friendly manner. The solid liquid separator 100 may be connected to a sink (such as shown in Figs. 3A-C) or other material disposal device through an inlet pipe 102. The inlet pipe 102 is connected to an outflow opening at the base of the sink or other waste disposal device and provides a pathway for mixed waste material, such as organic kitchen waste, to move from the sink, in a non-limiting example, into the solid liquid separator 100 for processing. The inlet pipe 102 may be in the range of about two (2) inches in diameter and of a length sufficient to connect the sink to the solid liquid separator 100. The inlet pipe 102 enters the solid liquid separator 100 through an opening 203 (shown in Fig. 2). Front plate 104 is preferably attached to inlet pipe 102 at opening 203 and has an opening corresponding with opening 203 to allow the passage of mixed waste material there through. Front plate 104 is sized and positioned such that it operates to help confine the incoming mixed waste inside the drum strainer 200 (shown in Fig. 2) of solid liquid separator 100 during the solid liquid separation processing of the mixed waste material. In one example, front plate 104 is preferably of a diameter slightly less than that of the interior diameter of drum strainer 200. The solid liquid separator 100 is preferably mounted such that it is perpendicular to a central axis of the opening 203 of the inlet pipe 102. This orientation places the front plate 104 and the rest of the apparatus perpendicular to the central axis of the opening 203 of the inlet pipe 102 as well. This orientation permits the inlet pipe 102 to introduce mixed waste material to an interior region of the solid liquid separator 100 device through the opening 203, which is preferably formed at a center of the front plate 104.

The solid liquid separator 100 may include a shroud 106 that functions to help prevent leakage of mixed waste material that is introduced to the system through the inlet pipe 102, as well as to constrain and collect the liquid waste material during the solid liquid separation processing. Solid liquid separator 100 may further include a spindle assembly 108 operatively connected thereto to provide both rotational and linear movement of certain components of the solid liquid separator 100 as described in more detail below. The spindle assembly 108 is preferably secured to a support structure, such as an interior wall of a cabinet, or other suitable mounting location, and is held in place by a spindle assembly support shaft 110. The assembly support shaft 110 is operative to provide a stable mounting for the solid liquid separator 100 during operation. The solid liquid separator 100 also may include a motor 112, such as an electric motor that is operative to provide linear movement of certain components of the solid liquid separator 100, preferably including the spindle assembly 108, drum strainer 200, shroud 106, and discharge lid 118 as may be required during the liquid solid separation process of the mixed waste material. Motor 112 may be mounted to or in close proximity to a base plate 111 of spindle assembly support shaft 110, or at any location suitable to provide the required linear movement. When activated, in one non-limiting example, the motor 112 causes a shaft 113, connected through a turnbuckle 114 to a back side of the spindle assembly 108, to rotate. Rotating the shaft 113 through the turnbuckle 114 in one direction will cause spindle assembly 108, drum strainer 200, shroud 106, and discharge lid 118 to move in a linear direction from an initial position toward the base plate 111 of the spindle assembly support shaft 110 to a secondary position. Rotating the shaft 113 through the turnbuckle 114 in an opposite direction will cause the spindle assembly 108, drum strainer 200, shroud 106, and discharge lid 118 to move in a linear direction away from the base plate 111 of the spindle assembly support shaft 110 and back to its initial position.

The solid liquid separator 100 shroud 106 also has a liquid discharge hose 116 that permits the egress of separated waste liquid material collected in the shroud 106 during waste separation operations. The liquid discharge hose 116 may be connected to a reservoir or other device used for containing liquids and may then be re-used as grey water for plants or other purposes. Alternatively, liquid discharge hose 116 may be connected to an existing sink drain line or other waste water drain line. The solids discharge door 118 is preferably attached to the spindle assembly 108, such that it covers a solid waste catch basin 120 when the solid liquid separator 100 is in its initial position. In this exemplary embodiment the solid waste catch basin 120 is held in place beneath the solids discharge door 118 by mounting brackets 122. The solid waste catch basin 120 may, in a certain embodiment, be placed manually in the mounting brackets 122 and removed manually when the solid waste catch basin 120 needs to be emptied. In an alternative embodiment solid waste catch basin 120 is replace with a manual or automatic pod bagger as described in more detail below with reference to Figs. 3B and 3C.

**Figure 2** illustrates a cross-sectional view of the solid liquid separator 100 consistent with certain embodiments of the invention. In an exemplary embodiment, when a user places mixed waste material (e.g., liquid and solid organic kitchen waste) into inlet pipe 102 the waste is gravity fed into the solid liquid separator 100 and into drum strainer 200 via opening 203. A user may use water to help the mixed waste travel down inlet pipe 102 and into an interior region of drum strainer 200. The drum strainer 200 preferably has a circular cross section and is mounted perpendicular to the center axis of the opening 203 of the inlet pipe 102 such that the mixed waste material placed in the inlet pipe 102 enters the drum strainer 200 at substantially a center point of the circular area defined by the drum strainer 200. The drum strainer 200 has a plurality of strainer openings 202 that penetrate the surface of the drum strainer 200 walls and are of a sufficient size so as to permit the passage of liquid waste material as it is separated from the input mixed waste material while constraining the exit of solid waste material. The strainer openings 202 may be of any size sufficient to permit the discharge of liquid while retaining the solid portion of the mixed waste material input into the drum strainer 200 of the solid liquid separator 100. On the other side of the drum strainer 200, opposite the face plate 104 and the waste inlet pipe 102, is a scraper plate 204 that forms the back side constraint against the input mixed waste material falling out of the drum strainer 200. The scraper plate 204 is also operative to scrape solid waste out of the drum strainer 200 at the end of a waste separation operation. The scraper plate 204 is preferably a circular plate and is attached to the spindle assembly support shaft 110 at a center portion of the scraper plate 204. Scraper plate 204 is preferably of a diameter slightly less than that of the interior diameter of drum strainer 200, such that scraper plate 204 is capable of scrapping the inner surface of drum strainer 200. The drum strainer 200 is supported in place by a drum bracket 205 that isolates the drum strainer 200 from the shroud 106, front plate 104, and scraper plate 204 while allowing the drum strainer 200 to move freely in a rotation motion during operation. The drum strainer 200, when activated, is rotated at a rate in the range of about 70 to about 80 revolutions per minute (rpm) to facilitate the separation of the solid and liquid waste material components. In one embodiment the drum strainer 200 spins at a rate in the range of about 74 to about 75 rpm. However, other rates of more or less that about 70 to about 80 rpm are contemplated by the invention, the exact rate being determined based on the amount and makeup of the mixed waste material in the drum strainer 200. The drum strainer 200 may spin for a defined amount of time to sufficiently separate the solid and liquid waste material. In one example, the drum strainer 200 may spin in the range of about five (5) to about 15 seconds. However, based on the waste material more or less time may be required and the spin time can be adjusted accordingly.

The drum shroud 106 is preferably spaced away from and substantially covers the exterior of the drum strainer 200 to contain and direct liquid waste material separated from the mixed waste material during the solid liquid separation process. Drum shroud 106 is preferably connected to the spindle assembly 108 by a shroud support arm 206. The spindle assembly 108 provides the rotational and linear forces to both rotate the drum strainer 200 and move the drum strainer 200, spindle assembly 108, shroud 106, and discharge lid 118 in a linear direction as required during the waste separation process. The drum bracket 205 is operatively engaged in a rotating manner with rotational bearings 208, which are positioned in an operative manner on spacer 210 to isolate the rotational bearings 208 from axial bearings 212 thus isolating the rotational movement from the linear movement. The rotational bearings 208 are positioned and configured to permit the drum strainer bracket 205 and drum strainer 200 to rotate in a rotational motion about the spindle assembly support shaft 110 when in operation. This rotational motion of the drum strainer 200 expels liquid waste from the mixed waste material in the drum strainer 200, by centrifugal and gravitational forces, through the strainer openings 202. The liquid waste expelled from the drum strainer 200, collects in the shroud 106 and is directed to liquid discharge hose 116 to be collected in a container or otherwise drained. The rotational motion of the drum strainer 200 is accomplished by a rotational motor 214. When activated, the rotational motor 214 is connected to a rotation gear 215 that translates the energy from the rotational motor 214 to a rotational gear 216 connected to the drum bracket 205 such that as rotational gear 216 is rotated drum bracket 205 is rotated, which in turn rotates the drum strainer 200 to perform the mixed waste solid liquid separation process.

When activated, the rotational motor 214 rotates the drum strainer 200 at a predefined speed for a pre-determined period of time, which is set to balance the amount of energy consumed by the motor against the removal of a substantial amount of the liquid from the mixed waste material input into the solid liquid separator 100. In one non-limiting example, the drum strainer 200 is rotated at a rate in the range of about 70 - 80 rpm for about five (5) to about 15 seconds. Upon the completion of this time period, the rotational motor 214 may continue to rotate, but at a slower rate from that used during the solid liquid separation process, to a range of about 10 to 20 rpm. Alternatively, after the solid liquid separation process the drum strainer 200 may rotate at a rate of more or less than about 10 to about 20 rpm, or may not rotate at all. After the solid liquid separation process, motor 112 is activated to move the spindle assembly 108, drum strainer 200, shroud 106, and discharge lid 118 in a linear motion from the initial position during the waste separation operation toward the base plate 111 of the spindle assembly support shaft 110 to a secondary position. The spindle assembly 108, to which the drum bracket 204 (and thus drum strainer 200), shroud 106, and discharge lid 118 are all operatively connected to, travel along a set of axial bearings 218 to smoothly move the drum strainer 200 past the stationary drum scraper plate 204, which has a slightly smaller diameter than the inside diameter of the drum strainer 200. The diameter of drum scraper plate 204 is preferably of a size such that an outer perimeter of the drum scraper plate 204 is nearly flush against the inside diameter of the drum strainer 200. As the drum strainer 200 moves in a linear motion it may continue to rotate at about 10 to about 15 rpm, or alternatively the drum strainer 200 does not continue to rotate, permitting the drum scraper plate 204 to scrape all collected solid waste material from the interior of the drum strainer 200 and pushes the solid waste material out of the drum strainer 200. The solid discharge door 118 moves in the linear direction with the shroud 106 and the drum strainer 200 during the scraping operation to allow the collected solids to be discharged into a solids collection area, such as solid waste catch basin 120.

When the scraping operation is complete, the motor 112 activates and causes linear motion in the opposite direction. This reverses the linear direction of the spindle assembly 108, drum strainer 200, shroud 106 and discharge lid 118 and returns them to their initial position. The discharge door 118, when moved back to its initial position, closes the solids discharge area when the system is not in use to help prevent odors from escaping. If drum strainer 200 is still rotating, the rotation motor 214 stops the rotational motion of the drum strainer 200 and the solid liquid separator 100 is in a ready state for the next operation as needed.

**Figure** 3A illustrates a solid liquid separator 100 attached to a sink basin 300, and including a solid waste catch basin 120 attached thereto consistent with certain embodiments of the invention. The sink basin 300 may be a sink or other basin commonly present in both residential and commercial kitchens. This non-limiting example presents the solid liquid separator 100 in a configuration that provides a solid waste catch basin 120 that may be manually inserted and removed when the solid waste catch basin 120 is full. In this embodiment, waste is input to the solid liquid separator 100 by depositing mixed waste material, such as food scraps and/or other organic kitchen waste into the inlet pipe 102 via a valve 302, such as a ball valve or other suitable valve type, located near a top portion of the inlet pipe 102. Valve 302, may include a valve actuator 303, and may be either a manual or automatic valve. To begin the waste separation operation, a user preferably activates the solid liquid separator 100 by activating a start button, for example the user may push a start button, or activate some other trigger, switch or other suitable activation mechanism. Upon activation, the valve 302 closes to prevent regurgitation of any liquid or solid waste material back up into the sink basin 300. In a preferred embodiment, the valve 302 is an automatic ball valve, and upon activation of the system, actuator 303 is activated and automatically closes the valve 302. The mixed waste material enters the solid liquid separator 100 via inlet pipe 102 and passes through opening 203 into an interior region of drum strainer 200, where the solid waste is constrained by the interior walls of the drum strainer 200, the front plate 104, and scraper plate 204, and the liquid waste is constrained by the shroud 106 during the solid liquid separation operation. Once the valve 302 closes, the solid liquid separator 100 senses, for example, via a sensor switch, such as a micro switch, that the valve 302 is closed and initiates rotation of the drum strainer 200 at a pre-determined rotation rate and for a pre-determined amount of time to effectively separate the liquid waste material from the solid waste material. In one example, the drum strainer 200 is rotated for a period of about five (5) to about 10 seconds and at a rate of about 74 to about 75 rpm. During this portion of the solid liquid separation process, the liquid waste material is separated out from the input mixed waste material by the centrifugal forces caused by the rotation of the drum strainer 200 and gravity, and is forced through strainer openings 202 and collected by the shroud 106 and directed to the liquid discharge hose 116 for collection or drainage. The remaining solid waste material is contained in the interior of drum strainer 200.

Upon termination of the pre-determined amount of time, motor 112, such as a linear movement motor with a turnbuckle, activates and causes the spindle assembly 108, drum strainer 200, shroud 106 and discharge lid 118 to move in a linear direction from an initial position toward base plate 111 of spindle assembly support shaft 110 to a secondary position. The inlet pipe 102, front plate 104, and scraper plate 204 all remain substantially stationary. As the drum strainer 200 moves in a linear direction towards the base plate 111 of the spindle assembly support shaft 110, scraper plate 204 provides scraping effect along the interior surface of the drum strainer 200 and any solid waste collected within the internal surface and/or area of the drum strainer 200 is scraped out by scraper plate 204. The linear movement toward the base plate 111 of the spindle assembly support shaft 110 caused by motor 112 also causes discharge door 118 to open permitting the scraped solid waste to drop from the internal area of the drum strainer 200 down into the solid waste catch basin 120. Once the interior surface of the drum strainer 200 has passed over the scraper plate to allow the entire interior surface of drum strainer 200 to be scraped and to push out the solid waste material therein, a sensor switch, such as a micro-switch, senses the drum strainer 200, spindle assembly 108, shroud 106 and discharge lid 118 are in the secondary position, and the motor is activated to cause the drum strainer 200 spindle assembly 108, shroud 106 and discharge lid 118 to move in a reverse linear direction back to the initial position. Once the drum strainer 200, spindle assembly 108, shroud 106 and discharge lid 118 are returned to their initial position, a sensor switch associated with valve 302, such as a micro-switch, senses the components are back in their initial position and activates valve 302 to automatically open again. The collected solid waste material may be removed from the solid waste catch basin 120 and recycled or otherwise disposed of.

**Figure 3B** illustrates a solid liquid separator 100 attached to a sink basin 300, including a manual pod bagger 305 attached thereto consistent with certain embodiments of the invention. This exemplary embodiment of solid liquid separator 100 is operationally the same as the example presented in Fig. 3A with the manual pod bagger 305 replacing the solid waste catch basin 120. The input mixed waste material is processed, again separating the liquid waste material from the solid waste material, and the solid waste material is scraped from the drum strainer 200 as detailed above with reference to Fig. 3A. In this embodiment the solid waste material is collected and bagged using manual pod bagger 305. After the interior surface of the drum strainer 200 is scraped the solid waste material drops into a bag, such as a biodegradable bag. Manual pod bagger 305 is preferably supported in position below discharge door 118 by brackets 122. Manual pod bagger 305 preferably includes a continuous open sleeve of material 314 accumulated in a sleeve tube 316. Alternatively, a prepackaged open sleeve cassette could be used. In use, manual pod bagger 305 is installed via brackets 122. The continuous open sleeve of material 314 is accumulated in the sleeve tube 316, or a prepackaged open sleeve cassette is installed. A knot 312, such as a simple over hand knot, is tied to a bottom end of the continuous open sleeve of material 314 to form a bottom of a pod 310. The continuous open sleeve of material 314 with tied bottom is pulled in a downward direction a distance to form a desired size pod 310. After an amount of solid waste from drum strainer 200 has been deposited into pod 310 and/or at a predetermined time a user then ties a second knot 312, such as a simple over hand knot, above the solid waste level to seal the solid waste in pod 310. A cutting device can be used to cut the sealed pod 310 from the continuous open sleeve of material 314. The user then pulls the continuous open sleeve of material 314 in downward direction to form the next desired size pod 310, and a knot 312 is tied to the bottom of the continuous open sleeve of material 314 to form the bottom of the next pod 310. Alternatively, the user may cut the pod 310 from the continuous open sleeve of material 314 prior to tying the second knot 312 and then seal the pod 310 after separating it from the continuous open sleeve material 314. In another alternative embodiment, the continuous open sleeve of material 314 may have perforations at set intervals along its length to facilitate separating into defined pod sizes, for example instead of using a cutting instrument to separate a pod 310 the user could simply tear along the perforations.

**Figure 3C** illustrates a solid liquid separator 100 attached to a sink basin 300, including an automatic pod bagger 330 attached thereto consistent with certain embodiments of the invention. This exemplary embodiment of the solid liquid separator 100 is operationally the same as the example presented in Figure 3A, with the automatic pod bagger 330 replacing the solid waste catch basin 120. The input mixed waste material is processed, again separating the liquid waste material from the solid waste material, and the solid waste material is scraped from the drum strainer 200, as detailed above with reference to Fig. 3A. In this embodiment the solid waste material is collected and bagged using automatic pod bagger 330. After the interior surface of the drum strainer 200 is scraped the solid waste material drops into a bag, such as a biodegradable bag. Automatic pod bagger 330 is preferably secured in position below discharge door 118 by brackets 122. Automatic pod bagger 330 preferably includes a continuous open sleeve of material 314 accumulated in a sleeve tube 316 having an open inside diameter. Alternatively, a prepackaged open sleeve cassette could be used. Automatic pod bagger 330 further includes a sleeve advancement clamp 340 operatively associated with and positioned below sleeve tube 316. Automatic pod bagger 330 further includes an upper sealer 336, a lower sealer 332, and a cutter 338 in operative association with sleeve advancement clamp 340, wherein the upper sealer 336 is positioned below lower sealer 332 and the cutter 338 is located between the upper sealer 336 and lower sealer 332. The upper sealer 336, lower sealer 332, and cutter 338 preferably comprise an assembly and are positioned above sleeve advancement clamp 340. In use, sleeve tube 316 is installed via brackets 122. Continuous open sleeve of material 314 is accumulated in the sleeve tube 316, or alternatively a prepackaged open sleeve cassette is used. Continuous open sleeve of material 314 is initially passed through the open inside diameter of sleeve tube 316 and past sleeve advancement clamp 340. The continuous open sleeve of material 314 maybe initially passed through the inside diameter of sleeve tube 316 and through sleeve advancement clamp 340 by a user manually pulling at an end portion of the continuous open sleeve of material 314 in a downward direction. Once an end portion of the continuous open sleeve of material 314 is initially passed through the inside diameter of sleeve tube 316 and through sleeve advancement clamp 340, an automatic seal cycle is initiated to form a seal across the end portion of the continuous open sleeve of material 314 to form a bottom of a pod 310. The automatic pod bagger 330 is now ready to receive and bag solid waste material from solid liquid separator 100. After an initial cycle of the system, i.e., solid liquid separation process and solid waste material discharge, the system's firmware activates the sleeve advancement clamp 340 to clamp and grip the bottom portion of pod 310 and indexes downward in a linear direction to a predetermined setting, e.g., as preset or as set by the user. This allows the user to set the pod 310 to any length that will function in the range of the solid liquid separator 100. After sleeve advancement clamp 340 has completed its cycle and the pod 310 has a sufficient amount of solid waste material collected therein, the upper sealer 336 and lower sealer 332 both activate. The upper sealer 336 seals the bottom of the next pod 310 and the lower sealer 332 seals the top of present pod 310. Both upper sealer 336 and lower sealer 332 are programmed or otherwise set to operate at temperatures suitable for sealing the sleeve material 314 based on the specific sleeve material 314 type parameters, and may be adjustable to accommodate different types of sleeve material 314 having differing parameters. After sealing is complete, cutter 338, which is preferably positioned between upper sealer 336 and lower sealer 332 separates a finished sealed pod 310 from the bottom of a next pod 310. Finished sealed pods 310 then preferably drop into pod receptacle, which may be removable for ease of emptying.

Alternatively, or in combination with the sensor switches, a system firmware may be provided and programmed to activate the various operations of the solid liquid separator 100.

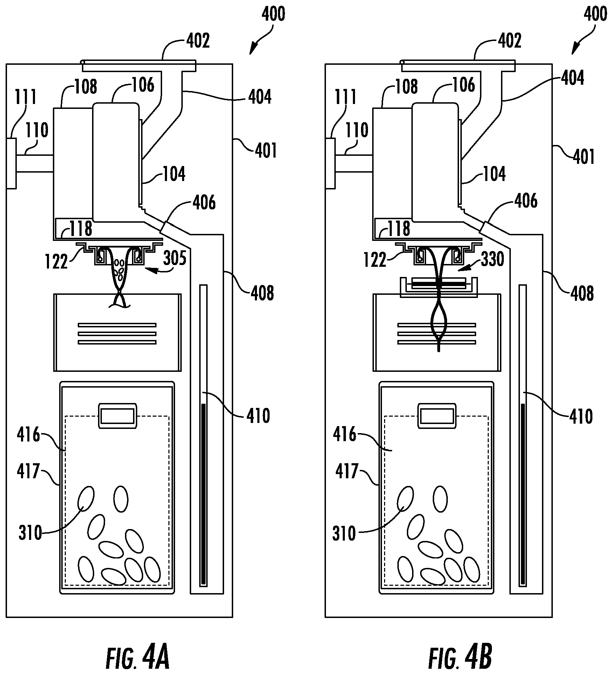

**Figure 4A** illustrates an internal view of a stand-alone waste removal apparatus 400 including a solid liquid separator 100 with a manual pod bagger 305 and pod receptacle 416 consistent with certain embodiments of the invention. This exemplary implementation presents a waste removal apparatus 400 having the solid liquid separator 100 with manual pod bagger 305 and pod receptacle 416 installed within a purpose built housing 401, such as a cabinet, that may be placed, for example, within a domestic or commercial kitchen. The top of the housing 401 preferably includes a lid 402 that is an entry point for the deposit of mixed waste material, such as organic waste, into the waste removal apparatus 400. Lid 402 may be a hinged, slideable, or other suitable type lid, and may be opened by hand or foot lever, by a push or pull lever, hand sensor technology, or other suitable means, and lid 402 may, for example, tilt back, tilt down, or slide open for easy access to an opening to waste inlet pipe 102 for deposit of mixed waste material. The deposited mixed waste material enters drum strainer 200 of the solid liquid separator 100 through waste inlet pipe 102 and waste separation operations are performed as described above, for example, with reference to Figs 2 and 3B. The separated out liquid waste material drains out of the drum strainer 200 and is collected and directed by shroud 106 to the liquid discharge hose 116 and drained into a purpose built liquid waste container 408. An indication of the level of waste liquid held in the liquid waste container 408 may be measured by a liquid level indicator 410, which may be formed on the liquid waste container 408. In one embodiment liquid level indicator 410 includes a clear window to visually indicate the amount of liquid waste contained in the liquid waste container 408. Alternatively, a float and gauge mechanism, or any other suitable mechanism for measuring a liquid level in a container could be used. In yet another alternative embodiment, the separated out liquid waste material drains out of the drum strainer 200 and is collected and directed by shroud 106 to the liquid discharge hose 116 and drained into an existing waste water discharge drain line, such as a residential sink drain line. The separated out solid waste material is bagged via manual pod bagger 305 through operations as described above with reference to Fig. 3B. The pods 310 of solid waste material preferably are collected in a pod receptacle 416 that is capable of holding a plurality of pods 310 and may be removable by the user for ease of emptying the container. In one embodiment, the pod receptacle 416 is housed in a receptacle housing 417, which may be a drawer or cabinet structure that can be opened to access the pod receptacle 416 for easy removal and emptying of pods 310. Receptacle housing 417, may, for example, be a swivel, tilt, or slideable type drawer or cabinet structure.

**Figure 4B** illustrates an internal view of a stand-alone waste removal apparatus 400 including a solid liquid separator 100 with an automatic pod bagger 330 and pod receptacle 416 consistent with certain embodiments of the invention. This exemplary implementation presents a waste removal apparatus 400 having the solid liquid separator 100 with automatic pod bagger 330 and pod receptacle 416 installed within a purpose built housing 401, such as a cabinet, that may be placed, for example, within a domestic or commercial kitchen. The top of the housing 401 preferably includes a lid 402 that is an entry point for the deposit of mixed waste material, such as organic waste, into the waste removal apparatus 400. Lid 402 may be a hinged, slideable, or other suitable type lid, and may be opened by a hand or foot lever, by a push or pull lever, hand sensor technology, or other suitable means, and lid 402 may, for example, tilt back, tilt down, or slide open for easy access to an opening to waste inlet pipe 102 for deposit of mixed waste material. The deposited mixed waste material enters drum strainer 200 of the solid liquid separator 100 through waste inlet pipe 102 and waste separation operations are performed as described above, for example, with reference to Figs 2 and 3C. The separated out liquid waste material drains out of the drum strainer 200 and is collected and directed by shroud 106 to the liquid discharge hose 116 and drained into a purpose built liquid waste container 408. An indication of the level of waste liquid held in the liquid waste container 408 may be measured by a liquid level indicator 410, which may be formed on the liquid waste container 408. In one embodiment liquid level indicator 410 includes a clear window to allow a visual indicator of the amount of liquid waste contained in the liquid waste container 408. Alternatively, a float and gauge mechanism, or any other suitable mechanism for measuring a liquid level in a container could be used. In yet another alternative embodiment, the separated out liquid waste drains out of the drum strainer 200 and is collected and directed by shroud 106 to the liquid discharge hose 116 and drained into an existing waste water discharge drain line, such as a residential sink drain line. The separated out solid waste material is bagged via the automatic pod bagger 330 through operations as described above with reference to Fig. 3C. The pods 310 of solid waste material preferably are collected in a pod receptacle 416 that is capable of holding a plurality of pods 310 and may be removable by the user for ease of emptying the container. In one embodiment, the pod receptacle 416 is housed in a receptacle housing 417, which may be a drawer or cabinet structure that can be opened to access the pod receptacle 416 for easy removal and emptying of pods 310. Receptacle housing 417, may, for example, be a swivel, tilt, or slideable type drawer or cabinet structure.

Alternatively, or in combination with the sensor switches, a system firmware may be provided and programmed to activate the various operations of the stand-alone waste removal apparatus 400.

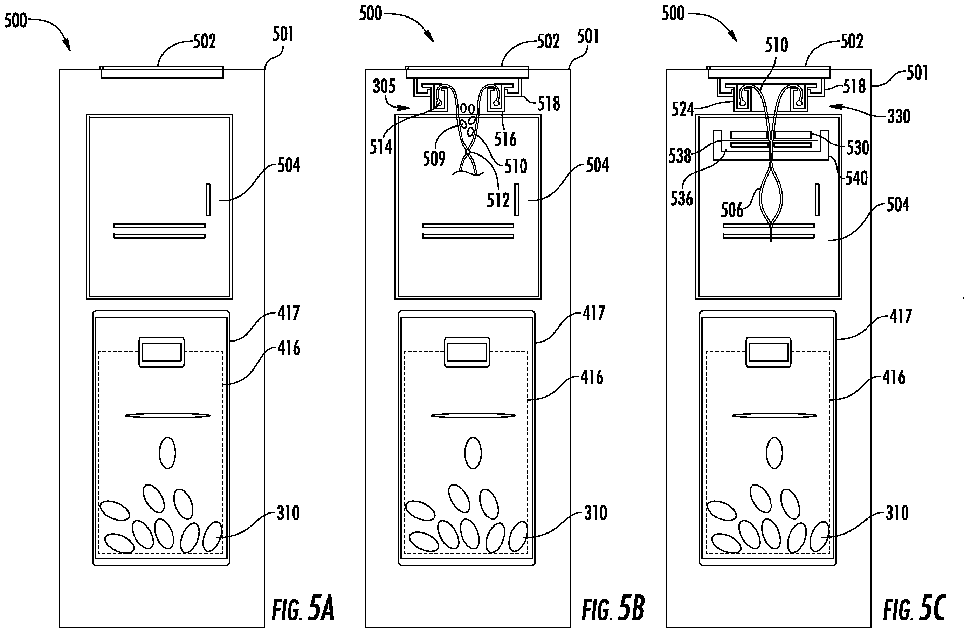

**Figure 5A** illustrates a stand-alone waste wrap and removal apparatus 500 with a pod receptacle 416 consistent with certain embodiments of the invention. In this exemplary embodiment the stand-alone waste wrap and removal apparatus 500 is composed of a housing 501, such as a cabinet structure. Preferably, housing 501 is of sufficient dimension to be installed, for example, within or next to standard domestic and commercial kitchen cabinets or appliance. The top of the housing 501 preferably includes a lid 502 that is an entry point for the deposit of waste material, such as organic waste, into the waste wrap and removal apparatus 500. Lid 502 may be a hinged, slideable, or other suitable type lid, and may be opened by hand or foot lever, by a push or pull lever, hand sensor technology, or other suitable means, and lid 502 may, for example, tilt back, tilt down, or slide open for easy access to an opening for deposit of waste material. The waste is deposited through an opening under lid 502 and into a wrap and seal compartment 504 of the waste wrap and removal apparatus 500. In the wrap and seal compartment 504, the deposited waste material is collected in, for example a bag, such as a biodegradable bag, and is bagged into pods 310 via the manual pod bagger 305 or automatic pod bagger 330 through operations as described above with reference to Figs. 3B and 3C respectively. The pods 310 of waste material preferably are collected in a pod receptacle 416 that is capable of holding a plurality of pods 310 and may be removable by the user for ease of emptying. In one embodiment, the pod receptacle 416 is housed in a receptacle housing 417, which may be a drawer or cabinet structure that can be opened to access the pod receptacle 416 for easy removal and emptying of pods 310. Receptacle housing 417, may, for example, be a swivel, tilt, or slideable type drawer or cabinet structure.

**Figure 5B** illustrates an interior view of a stand-alone waste wrap and removal apparatus 500 with a manual pod bagger 305 and pod receptacle 416 consistent with certain embodiments of the invention. In this exemplary embodiment the stand-alone waste wrap and removal apparatus 500 is composed of a housing 501, such as a cabinet structure. Preferably, housing 501 is of sufficient dimension to be installed, for example, within or next to standard domestic and commercial kitchen cabinets or appliance. The top of the housing 501 preferably includes a lid 502 that is an entry point for the deposit of waste material, such as organic waste, into the waste wrap and removal apparatus 500. Lid 502 may be a hinged, slideable, or other suitable type lid, and may be opened by hand or foot lever, by a push or pull lever, hand sensor technology, or other suitable means, and lid 502 may, for example, tilt back, tilt down, or slide open for easy access to an opening for deposit of waste material. The waste is deposited through an opening under lid 502 and into a wrap and seal compartment 504 of the waste wrap and removal apparatus 500. In the wrap and seal compartment 504, the deposited waste material is collected in, for example a bag, such as a biodegradable bag, and is bagged into pods 310 via the manual pod bagger 305 through operations as described above with reference to Fig. 3B. The pods 310 of waste material preferably are collected in a pod receptacle 416 that is capable of holding a plurality of pods 310 and may be removable by the user for ease of emptying the container. In one embodiment, the pod receptacle 416 is housed in a receptacle housing 417, which may be a drawer or cabinet structure that can be opened to access the pod receptacle 416 for easy removal and emptying of pods 310. Receptacle housing 417, may, for example, be a swivel, tilt, or slideable type drawer or cabinet structure.

**Figure 5C** illustrates an interior view of a stand-alone waste wrap and removal apparatus 500 with an automatic pod bagger 3330 and pod receptacle 416 consistent with certain embodiments of the invention. In this exemplary embodiment the stand-alone waste wrap and removal apparatus 500 is composed of a housing 501, such as a cabinet structure. Preferably, housing 501 is of sufficient dimension to be installed, for example, within or next to standard domestic and commercial kitchen cabinets or appliance. The top of the housing 501 preferably includes a lid 502 that is an entry point for the deposit of waste material, such as organic waste, into the waste wrap and removal apparatus 500. Lid 502 may be a hinged, slideable, or other suitable type lid, and may be opened by a hand or foot lever, by a push or pull lever, hand sensor technology, or other suitable means, and lid 502 may, for example, tilt back, tilt down, or slide open for easy access to an opening for deposit of waste material. The waste is deposited through an opening under lid 502, and into a wrap and seal compartment 504 of the waste wrap and removal apparatus 500. In the wrap and seal compartment 504, the deposited waste material is collected in, for example a bag, such as a biodegradable bag, and is bagged into pods 310 via the automatic pod bagger 330 through operations as described above with reference to Fig. 3C. The pods 310 of waste material preferably are collected in a pod receptacle 416 that is capable of holding a plurality of pods 310 and may be removable by the user for ease of emptying the container. In one embodiment, the pod receptacle 416 is housed in a receptacle housing 417, which may be a drawer or cabinet structure that can be opened to access the pod receptacle 416 for easy removal and emptying of pods 310. Receptacle housing 417, may, for example, be a swivel, tilt, or slideable type drawer or cabinet structure.

Alternatively, or in combination with the sensor switches, a system firmware may be provided and programmed to activate the various operations of the stand-alone waste wrap and removal apparatus 500.

### 6 Concluding Remarks

The foregoing detailed description of embodiments refers to the accompanying drawings, which illustrate specific embodiments of the invention. Other embodiments having different structures and operations do not depart from the scope of the present invention. The term "the invention" or the like is used with reference to certain specific examples of the many alternative aspects or embodiments of the applicant's invention set forth in this specification, and neither its use nor its absence is intended to limit the scope of the applicant's invention or the scope of the claims. This specification is divided into sections for the convenience of the reader only. Headings should not be construed as limiting of the scope of the invention. The definitions are intended as a part of the description of the invention. It will be understood that various details of the present invention may be changed without departing from the scope of the present invention as claimed in the appended claims. Furthermore, the foregoing description is for the purpose of illustration only, and not for the purpose of limitation.

## Claims

1. An apparatus for separating mixed waste material into liquid and solid components comprising:
an inlet pipe (102) having openings at a bottom portion and top portion thereof;
a front plate (104) having an opening (203), wherein the front plate is connected to the inlet pipe at the inlet pipe opening, such that the front plate opening and one of said inlet pipe opening align;
a drum strainer (200) capable of rotational and linear movement, having a plurality of openings for permitting passage of liquid waste material and retaining solid waste material;
a spindle assembly (108) operatively connected to the drum strainer, wherein the spindle assembly facilitates the rotational and linear movement of the drum strainer;
a scraper plate (204) fixed to an end portion of a shaft of the spindle assembly;
a shroud (106) connected to the spindle assembly, wherein the shroud is spaced apart from and substantially covers the exterior surface of the drum strainer; and
wherein the drum strainer is positioned between the front plate and scraper plate, and the drum strainer, the front plate, and the scraper plate define an interior region within which mixed waste material is received via the inlet pipe;
wherein the retained solid waste material is caused to be discharged from the strainer drum interior region via a scrapping action of said scraper plate.

2. The apparatus of claim 1, wherein the front plate is connected to the inlet pipe such that it is perpendicular to a central axis of the opening at the bottom portion of the inlet pipe.

3. The apparatus of claim 1, wherein the drum strainer is operatively connected to the spindle assembly by a drum bracket (205), wherein the drum bracket is operatively associated with one or more rotational bearings (208) to allow rotational movement of the drum strainer about the shaft of the spindle assembly, wherein said apparatus optionally further comprises a rotational motor (214) and a gear assembly (215), wherein the gear assembly is operatively connected to the drum bracket, and the rotational motor is operatively connected to the gear assembly to impart rotational movement to the gear assembly causing the drum bracket and drum strainer to rotate.

4. The apparatus of claim 1, further comprising a motor configured to impart linear movement, the motor operatively connected to the spindle assembly to impart linear movement to at least the drum strainer and spindle assembly along the spindle assembly shaft, wherein the spindle assembly and spindle assembly shaft are optionally operatively engaged with one or more axial bearings to facilitate the liner movement of the spindle assembly along the spindle assembly shaft.

5. The apparatus of claim 1, wherein the spindle shaft, scraper plate, front plate and inlet pipe remain substantially stationary during operation of the apparatus.

6. The apparatus of claim 1, further comprising a liquid waste discharge hose (116) connected to the shroud.

7. The apparatus of claim 1, further comprising a discharge door (118) positioned below the strainer drum, wherein the discharge door is operatively connected to the spindle assembly such that the spindle assembly causes the discharge door to move in the same linear direction with the drum strainer.

8. The apparatus of claim 1, wherein the strainer drum is rotatable at a sufficient rate to substantially separate liquid waste material from solid waste material, and the liquid waste is caused to be discharged through a plurality of openings (202) in the strainer drum, wherein the liquid waste can be collected and directed by the shroud to the liquid waste discharge hose, and wherein the solid waste is caused to be discharged from the strainer drum interior region via a scraping action of the scraper plate.

9. The apparatus of claim 8 wherein said apparatus further comprises a solid waste collector positioned below the drum strainer and configured to collect solid waste discharged from the strainer drum interior region, wherein said solid waste collector comprises a manual solid waste bagger (305) or an automatic solid waste bagger (330),
wherein
said manual solid waste bagger optionally comprises a continuous open sleeve of material (314) and a sleeve tube (316), wherein the continuous open sleeve of material is accumulated in the sleeve tube, and
said automatic solid waste bagger optionally comprises a continuous open sleeve of material; a sleeve tube, wherein the continuous open sleeve of material is accumulated in the sleeve tube; a sleeve advancement clamp (340) operatively associated with and positioned below sleeve tube and configured to engage a portion of the continuous open sleeve of material to advance a defined length of continuous open sleeve of material from the sleeve tube; an upper sealer (336); a lower sealer (332); and a cutter (338), wherein the upper sealer, lower sealer, and cutter are in operative association with and positioned above the sleeve advancement clamp, and wherein the upper sealer is positioned below the lower sealer and the cutter is located between the upper sealer and the lower sealer, and wherein the upper sealer, lower sealer, and cutter comprise an assembly.

10. The apparatus of claim 1, wherein the front plate and scraper plate have a slightly smaller diameter than an internal diameter of the drum strainer, wherein a front portion and back portion of the drum strainer optionally overlaps at least a portion of a perimeter edge of the face plate and the scraper plate respectively.

11. The apparatus of claim 1, wherein the scraper plate is configured to held stationary as the drum strainer moves and is capable to perform a scraping action while the drum strainer is moved in a linear direction to remove accumulated solid waste from an interior of the drum strainer.

12. The apparatus of claim 1, wherein the apparatus is configured to permit a rotational rate of the drum strainer in the range of about 70 to about 80 revolutions per minute or in the range of about 74 to about 85 revolutions per minute.

13. The apparatus of claim 1, wherein the opening at the top portion of the inlet pipe is connectable to a sink (300), wherein said apparatus optionally further comprises a valve (302) positioned in the inlet pipe upper portion in proximity to the connection of the inlet pipe to the sink, wherein said valve optionally comprises a ball valve.

14. A system for separating mixed waste material into liquid and solid components comprising:
a housing (501);
a solid liquid separating apparatus of any one of claims 1 to 8 or 10 to 12 housed in an interior region of the housing;
a solid waste wrap and seal compartment housed in the interior region of the housing and positioned below the solid liquid separator (100), wherein the solid waste wrap and seal compartment (504) is configured to collect and seal solid waste material separated out from the solid liquid separator; and
a solid waste receptacle housed in the interior region of the housing and positioned below the solid waste wrap and seal compartment, wherein the solid waste receptacle is configured to collect sealed solid waste material from the solid waste wrap and seal compartment,
wherein the solid waste wrap and seal compartment optionally comprises a manual solid waste bagger which optionally comprises a continuous open sleeve of material and a sleeve tube, wherein the continuous open sleeve of material is accumulated in the sleeve tube, or said solid waste wrap and seal compartment optionally comprises an automatic solid waste bagger which optionally comprises a continuous open sleeve of material; a sleeve tube, wherein the continuous open sleeve of material is accumulated in the sleeve tube; a sleeve advancement clamp operatively associated with and positioned below sleeve tube and configured to engage a portion of the continuous open sleeve of material to advance a defined length of continuous open sleeve of material from the sleeve tube; an upper sealer; a lower sealer; and a cutter, wherein the upper sealer, lower sealer, and cutter are in operative association with and positioned above the sleeve advancement clamp, and wherein the upper sealer is positioned below the lower sealer and the cutter is located between the upper sealer and the lower sealer, and wherein the upper sealer, lower sealer, and cutter comprise an assembly,
wherein said housing optionally further comprises a lid, wherein the lid provides access to the opening at the top portion of the inlet pipe, or said housing optionally further comprises a solid waste receptacle housing, wherein the solid waste receptacle is housed therein, or said housing optionally further comprises a liquid waste container fluidly connected to the liquid waste discharge hose wherein said liquid waste container optionally comprises a liquid level indicator.

## Patentansprüche

1. Vorrichtung zum Trennen gemischter Abfallmaterialien in flüssige und feste Komponenten, umfassend:
eine Einlassleitung (102) mit Öffnungen an einem unteren Abschnitt und einem oberen Abschnitt davon;
eine Vorderplatte (104) mit einer Öffnung (203), wobei die Vorderplatte mit der Einlassleitung an der Einlassleitungsöffnung verbunden ist, so dass die Vorderplattenöffnung und eine der Einlassleitungsöffnungen aufeinander ausgerichtet sind;
ein Trommelsieb (200), das zu einer Rotations- und Linearbewegung in der Lage ist, mit einer Vielzahl von Öffnungen, um das Durchlaufen von flüssigen Abfallmaterialien und das Zurückhalten fester Abfallmaterialien zuzulassen;
eine Spindelanordnung (108), die mit dem Trommelsieb operativ verbunden ist, wobei die Spindelanordnung die Rotations- und Linearbewegung des Trommelsiebs erleichtert;
eine Schaberplatte (204), die an einen Endabschnitt einer Welle der Spindelanordnung befestigt ist;
eine mit der Spindelanordnung verbundene Verkleidung (106), wobei die Verkleidung von der Außenfläche des Trommelsiebs beabstandet ist und sie im Wesentlichen abdeckt;
und wobei das Trommelsieb zwischen der Vorderplatte und der Schaberplatte positioniert ist und das Trommelsieb, die Vorderplatte und die Schaberplatte eine Innenregion definieren, in der gemischtes Abfallmaterial über die Einlassleitung aufgenommen wird;
wobei durch eine Schaberwirkung der Schaberplatte bewirkt wird, dass das zurückgehaltene feste Abfallmaterial aus der Innenregion des Trommelsiebs abgelassen wird.

2. Vorrichtung nach Anspruch 1, wobei die Vorderplatte so mit der Einlassleitung verbunden ist, dass sie senkrecht zu einer Mittelachse der Öffnung am unteren Abschnitt der Einlassleitung ist.

3. Vorrichtung nach Anspruch 1, wobei das Trommelsieb durch eine Trommelklammer (205) mit der Spindelanordnung operativ verbunden ist, wobei die Trommelklammer einem oder mehreren Drehlagern (208) operativ zugeordnet ist, um eine Rotationsbewegung des Trommelsiebs um die Welle der Spindelanordnung zu gestatten, wobei die Vorrichtung optional ferner einen Rotationsmotor (214) und eine Getriebeanordnung (215) umfasst, wobei die Getriebeanordnung mit der Trommelklammer operativ verbunden ist und der Rotationsmotor operativ mit der Getriebeanordnung verbunden ist, um der Getriebeanordnung eine Rotationsbewegung zu vermitteln, die bewirkt, dass sich die Trommelklammer und das Trommelsieb drehen.

4. Vorrichtung nach Anspruch 1, ferner umfassend einen Motor, der konfiguriert ist, um Linearbewegung zu vermitteln, wobei der Motor mit der Spindelanordnung operativ verbunden ist, um mindestens dem Trommelsieb und der Spindelanordnung entlang der Welle der Spindelanordnung Linearbewegung zu vermitteln, wobei die Spindelanordnung und die Welle der Spindelanordnung optional mit einem oder mehreren Axiallagern operativ in Eingriff stehen, um die Linearbewegung der Spindelanordnung entlang der Welle der Spindelanordnung zu erleichtern.

5. Vorrichtung nach Anspruch 1, wobei die Spindelwelle, Schaberplatte, Vorderplatte und Einlassleitung während des Betriebs der Vorrichtung im Wesentlichen stationär bleiben.

6. Vorrichtung nach Anspruch 1, ferner umfassend einen mit der Verkleidung verbundenen Ablassschlauch (116) für flüssigen Abfall.

7. Vorrichtung nach Anspruch 1, ferner umfassend eine Ablasstür (118), die unter der Siebtrommel positioniert ist, wobei die Ablasstür operativ mit der Spindelanordnung verbunden ist, so dass die Spindelanordnung bewirkt, dass sich die Ablasstür in derselben Linearrichtung mit dem Trommelsieb bewegt.

8. Vorrichtung nach Anspruch 1, wobei die Siebtrommel in einer ausreichenden Geschwindigkeit gedreht werden kann, um im Wesentlichen flüssiges Abfallmaterial von festem Abfallmaterial zu trennen und bewirkt wird, dass der flüssige Abfall durch eine Vielzahl von Öffnungen (202) in der Siebtrommel abgelassen wird, wobei der flüssige Abfall gesammelt und durch die Verkleidung zum Ablassschlauch für flüssigen Abfall geleitet werden kann, und wobei bewirkt wird, dass der feste Abfall durch eine Schaberwirkung der Schaberplatte aus der Innenregion der Siebtrommel abgelassen wird.

9. Vorrichtung nach Anspruch 8, wobei die Vorrichtung ferner einen Sammler für festen Abfall umfasst, der unter dem Trommelsieb angeordnet und konfiguriert ist, um aus der Innenregion der Siebtrommel abgelassenen festen Abfall zu sammeln, wobei der Sammler für festen Abfall eine manuelle Abfüllvorrichtung (305) für festen Abfall oder eine automatische Abfüllvorrichtung (330) für den festen Abfall umfasst,
wobei die manuelle Abfüllvorrichtung für festen Abfall optional ein offenes Endloshüllenmaterial (314) und einen Hüllenschlauch (316) umfasst, wobei das offene Endloshüllenmaterial im Hüllenschlauch angesammelt wird, und
die automatische Abfüllvorrichtung für festes Material optional ein offenes Endloshüllenmaterial; einen Hüllenschlauch, wobei das offene Endloshüllenmaterial im Hüllenschlauch angesammelt wird; eine Hüllenvorschubklemme (340), die dem Hüllenschlauch operativ zugeordnet und unter ihm angeordnet und konfiguriert ist, um einen Abschnitt des offenen Endloshüllenmaterials in Eingriff zu nehmen, um eine definierte Länge des offenen Endloshüllenmaterials aus dem Hüllenschlauch vorzuschieben; eine obere Verschlussvorrichtung (336); eine untere Verschlussvorrichtung (332); und eine Schnittvorrichtung (338) umfasst, wobei die obere Verschlussvorrichtung, die untere Verschlussvorrichtung und die Schnittvorrichtung der Hüllenvorschubklemme operativ zugeordnet und über ihr angeordnet sind, und wobei die obere Verschlussvorrichtung unter der unteren Verschlussvorrichtung angeordnet ist und sich die Schnittvorrichtung zwischen der oberen Verschlussvorrichtung und der unteren Verschlussvorrichtung befindet, und wobei die obere Verschlussvorrichtung, untere Verschlussvorrichtung und die Schnittvorrichtung eine Anordnung umfassen.

10. Vorrichtung nach Anspruch 1, wobei die Vorderplatte und die Schaberplatte einen etwas kleineren Durchmesser aufweisen als ein Innendurchmesser des Trommelsiebs, wobei ein Vorderabschnitt und ein Hinterabschnitt des Trommelsiebs optional mindestens einen Abschnitt einer Umfangkante der Vorderplatte bzw. der Schaberplatte überlappt.

11. Vorrichtung nach Anspruch 1, wobei die Schaberplatte konfiguriert ist, um stationär gehalten zu werden, während sich das Trommelsieb bewegt, und in der Lage ist, eine Schaberwirkung durchzuführen, während das Trommelsieb in einer Linearrichtung bewegt wird, um angesammelten festen Abfall aus einem Inneren des Trommelsiebs zu entfernen.

12. Vorrichtung nach Anspruch 1, wobei die Vorrichtung konfiguriert ist, um eine Rotationsgeschwindigkeit des Trommelsiebs im Bereich von etwa 70 bis etwa 80 Umdrehungen pro Minute oder im Bereich von etwa 74 bis etwa 85 Umdrehungen pro Minute zuzulassen.

13. Vorrichtung nach Anspruch 1, wobei die Öffnung am oberen Abschnitt der Einlassleitung mit einer Wanne (300) verbunden werden kann, wobei die Vorrichtung optional ferner ein Ventil (302) umfasst, das im oberen Abschnitt der Einlassleitung in der Nähe zur Verbindung der Einlassleitung mit der Wanne angeordnet ist, wobei das Ventil optional ein Kugelventil umfasst.

14. System zum Trennen gemischter Abfallmaterialien in flüssige und feste Komponenten, umfassend:
ein Gehäuse (501);
eine Fest/Flüssig-Trennvorrichtung nach einem der Ansprüche 1 bis 8 oder 10 bis 12, die in einer Innenregion des Gehäuses untergebracht ist;
eine in der Innenregion des Gehäuses untergebrachte Umhüllungs- und Verschlusskammer für festen Abfall, die unter der Fest/Flüssig-Trennvorrichtung (100) angeordnet ist, wobei die Umhüllungs- und Verschlusskammer für festen Abfall (504) konfiguriert ist, um feste Abfallmaterialien, die aus der Fest/Flüssig-Trennvorrichtung getrennt werden, zu sammeln und zu verschließen;
und eine in der Innenregion des Gehäuses untergebrachte Aufnahme für festen Abfall, die unter der Umhüllungs- und Verschlusskammer für festen Abfall angeordnet ist, wobei die Aufnahme für festen Abfall konfiguriert ist, um verschlossenes festes Abfallmaterial aus der Umhüllungs- und Verschlusskammer für festen Abfall zu sammeln,
wobei die Umhüllungs- und Verschlusskammer für festen Abfall optional eine manuelle Abfüllvorrichtung für festen Abfall umfasst, die optional ein offenes Endloshüllenmaterial und einen Hüllenschlauch umfasst, wobei das offene Endloshüllenmaterial im Hüllenschlauch angesammelt ist, oder wobei die Umhüllungs- und Verschlusskammer für festen Abfall optional eine automatische Abfüllvorrichtung für festen Abfall umfasst, die optional ein offenes Endloshüllenmaterial; einen Hüllenschlauch, wobei das offene Endloshüllenmaterial im Hüllenschlauch angesammelt ist; eine Hüllenvorschubklammer, die dem Hüllenschlauch operativ zugeordnet und unter ihm angeordnet und konfiguriert ist, einen Abschnitt des offenen Endloshüllenmaterials in Eingriff zu nehmen, um eine definierte Menge des offenen Endloshüllenmaterials aus dem Hüllenschlauch vorzuschieben; eine obere Verschlussvorrichtung; eine untere Verschlussvorrichtung; und eine Schnittvorrichtung umfasst, wobei die obere Verschlussvorrichtung, die untere Verschlussvorrichtung und die Schnittvorrichtung der Hüllenvorschubklammer operativ zugeordnet und über ihr angeordnet sind, und wobei die obere Verschlussvorrichtung unter der unteren Verschlussvorrichtung angeordnet ist und sich die Schnittvorrichtung zwischen der oberen Verschlussvorrichtung und der unteren Verschlussvorrichtung befindet, und wobei die obere Verschlussvorrichtung, die untere Verschlussvorrichtung und die Schnittvorrichtung eine Anordnung umfassen,
wobei das Gehäuse optional ferner einen Deckel umfasst, wobei der Deckel Zugang zur Öffnung am oberen Abschnitt der Einlassleitung bereitstellt, oder das Gehäuse optional ferner ein Gehäuse für eine Aufnahme für festen Abfall umfasst, wobei die Aufnahme für festen Abfall darin untergebracht ist, oder das Gehäuse optional ferner einen Behälter für flüssigen Abfall umfasst, der strömungstechnisch mit dem Ablassschlauch für flüssigen Abfall verbunden ist, wobei der Behälter für flüssigen Abfall optional einen Flüssigkeitsstandsanzeiger umfasst.

## Revendications

1. Appareil de séparation de matières de déchets mélangés en composants liquides et solides comprenant :
un tuyau d'admission (102) ayant des ouvertures au niveau d'une partie inférieure et d'une partie supérieure de celui-ci ;
une plaque avant (104) ayant une ouverture (203), dans laquelle la plaque avant est raccordée au tuyau d'admission au niveau de l'ouverture du tuyau d'admission, de telle sorte que l'ouverture de la plaque avant et l'une desdites ouvertures du tuyau d'admission s'alignent ;
un filtre à tambour (200) capable d'un déplacement rotatif et linéaire, ayant une pluralité d'ouvertures destinées à permettre le passage de matières de déchets liquides et à retenir les matières de déchets solides ;
un ensemble d'axe (108) raccordé de manière opérationnelle au filtre à tambour, dans lequel l'ensemble d'axe facilite le déplacement rotatif et linéaire du filtre à tambour ; une plaque de raclage (204) fixée à une partie d'extrémité d'un arbre de l'ensemble d'axe ; un flasque (106) raccordé à l'ensemble d'axe, dans lequel le flasque est espacé de et recouvre sensiblement la surface extérieure du filtre à tambour ;
et dans lequel le filtre à tambour est positionné entre la plaque avant et la plaque de raclage, et le filtre à tambour, la plaque avant et la plaque de raclage définissent une zone intérieure à l'intérieur de laquelle les matières de déchets mélangés sont reçues via le tuyau d'admission ;
dans lequel les matières de déchets solides retenues sont amenées à être évacuées de la zone intérieure du filtre à tambour par le biais d'une action de raclage de ladite plaque de raclage.

2. Appareil selon la revendication 1, dans lequel la plaque avant est raccordée au tuyau d'admission de manière à être perpendiculaire à un axe central de l'ouverture au niveau d'une partie inférieure du tuyau d'admission.

3. Appareil selon la revendication 1, dans lequel le filtre à tambour est raccordé de manière opérationnelle à l'ensemble d'axe par un support de tambour (205), dans lequel le support de tambour est associé de manière opérationnelle à un ou plusieurs paliers rotatifs (208) pour permettre un déplacement rotatif du filtre à tambour par rapport à l'arbre de l'ensemble d'axe, dans lequel ledit appareil comprend en outre en option un moteur rotatif (214) et un ensemble d'engrenages (215), dans lequel l'ensemble d'engrenages est raccordé de manière opérationnelle au support de tambour, et le moteur rotatif est raccordé de manière opérationnelle à l'ensemble d'engrenages pour induire un mouvement de rotation à l'ensemble d'engrenages amenant le support de tambour et le filtre à tambour à tourner.

4. Appareil selon la revendication 1, comprenant en outre un moteur configuré pour induire un déplacement linéaire, le moteur raccordé de manière opérationnelle à l'ensemble d'axe pour induire un déplacement linéaire au moins au filtre à tambour et à l'ensemble d'axe le long de l'arbre de l'ensemble d'axe, dans lequel l'ensemble d'axe et l'arbre de l'ensemble d'axe sont en option en prise de manière opérationnelle avec un ou plusieurs paliers axiaux pour faciliter le déplacement linéaire de l'ensemble d'axe le long de l'arbre de l'ensemble d'axe.

5. Appareil selon la revendication 1, dans lequel l'arbre de l'axe, la plaque de raclage, la plaque avant et le tuyau d'admission restent sensiblement stationnaires pendant l'utilisation de l'appareil.

6. Appareil selon la revendication 1, comprenant en outre un conduit de décharge de déchets liquides (116) raccordé au flasque.

7. Appareil selon la revendication 1, comprenant en outre une porte d'évacuation (118) positionnée sous le filtre à tambour, dans lequel la porte d'évacuation est raccordée de manière opérationnelle à l'ensemble d'axe de telle sorte que l'ensemble d'axe amène la porte d'évacuation à se déplacer dans la même direction linéaire que le filtre à tambour.

8. Appareil selon la revendication 1, dans lequel le filtre à tambour est rotatif à un vitesse suffisante pour séparer sensiblement les matières de déchets liquides des matières de déchets solides, et les déchets liquides sont amenés à être évacués à travers une pluralité d'ouvertures (202) dans le filtre à tambour, dans lequel les déchets liquides peuvent être collectés et dirigés par le flasque vers le conduit d'évacuation de déchets liquides, et dans lequel les déchets solides sont amenés à être évacués de la zone intérieure du filtre à tambour par le biais d'une action de raclage de la plaque de raclage.

9. Appareil selon la revendication 8, dans lequel ledit appareil comprend en outre un collecteur de déchets solides positionné sous le filtre à tambour et configuré pour collecter des déchets solides déchargés depuis la zone intérieure du filtre à tambour, dans lequel ledit collecteur de déchets solides comprend un système d'ensachage manuel de déchets solides (305) ou un système d'ensachage automatique de déchets solides (330), dans lequel le système d'ensachage manuel de déchets solides comprend en option un fourreau ouvert continu de matières (314) et un tube de fourreau (316), dans lequel le fourreau ouvert continu de matières est accumulé dans le tube de fourreau, et ledit système d'ensachage automatique de déchets solides comprend en option un fourreau ouvert continu de matières ; un tube de fourreau, dans lequel le fourreau ouvert continu de matières est accumulé dans le tube de fourreau ; un collier d'avancement du fourreau (340) associé de manière opérationnelle à et positionné sous le tube de fourreau et configuré pour mettre en prise une partie du fourreau ouvert continu de matières pour avancer une longueur définie de fourreau ouvert continu de matières depuis le tube de fourreau ; un système d'étanchéité supérieur (336) ; un système d'étanchéité inférieur (332) ; et un couteau (338), dans lequel le système d'étanchéité supérieur, le système d'étanchéité inférieur et le couteau sont en association opérationnelle avec et positionnés au-dessus du collier d'avancement du fourreau, et dans lequel le système d'étanchéité supérieur est positionné sous le système d'étanchéité inférieur et le couteau se situe entre le système d'étanchéité supérieur et le système d'étanchéité inférieur, et dans lequel le système d'étanchéité supérieur, le système d'étanchéité inférieur et le couteau comprennent un ensemble.

10. Appareil selon la revendication 1, dans lequel la plaque avant et la plaque de raclage ont un diamètre légèrement inférieur à un diamètre interne du filtre à tambour, dans lequel une partie avant et une partie arrière du filtre à tambour chevauchent en option au moins une partie d'un bord périmétrique de la plaque avant et de la plaque de raclage, respectivement.

11. Appareil selon la revendication 1, dans lequel la plaque de raclage est configurée pour rester stationnaire tandis que le filtre à tambour est déplacé et est capable d'effectuer une action de raclage tandis que le filtre à tambour est déplacé dans une direction linéaire pour retirer des déchets solides accumulés depuis un intérieur du filtre à tambour.

12. Appareil selon la revendication 1, dans lequel l'appareil est configuré pour permettre une vitesse de rotation du filtre à tambour dans la plage d'environ 70 à environ 80 tours par minute ou dans la plage d'environ 74 à environ 85 tours par minute.

13. Appareil selon la revendication 1, dans lequel l'ouverture au niveau de la partie supérieure du tuyau d'admission est raccordable à un évier (300), dans lequel ledit appareil comprend en outre en option une vanne (302) positionnée dans la partie supérieure du tuyau d'admission à proximité du raccordement du tuyau d'admission à l'évier, dans lequel ladite vanne comprend en option un clapet à bille.

14. Système de séparation de matières de déchets mélangés en composants liquides et solides comprenant :
un boîtier (501) ;
un appareil de séparation solides - liquides selon l'une quelconque des revendications 1 à 8 ou 10 à 12, logé dans une zone intérieure du boîtier ;
un compartiment d'enveloppement et d'étanchéité de déchets solides logé dans la zone intérieure du boîtier et positionné sous le séparateur solides - liquides (100), dans lequel le compartiment d'enveloppement et d'étanchéité de déchets solides (504) est configuré pour collecter et étanchéifier des matériaux de déchets solides séparés en sortie du séparateur solides - liquides ;
et un réceptacle de déchets solides logé dans la zone intérieure du logement et positionné sous le compartiment d'enveloppement et d'étanchéité de déchets solides, dans lequel le réceptacle de déchets solides est configuré pour collecter des matières de déchets solides étanchéifiées depuis le compartiment d'enveloppement et d'étanchéité de déchets solides, dans lequel le compartiment d'enveloppement et d'étanchéité de déchets solides comprend en option un système d'ensachage manuel de déchets solides qui comprend en option un fourreau ouvert continu de matières et un tube de fourreau, dans lequel le fourreau ouvert continu de matières est accumulé dans le tube de fourreau ou ledit compartiment d'enveloppement et d'étanchéité de déchets solides comprend en option un système d'ensachage automatique de déchets solides qui comprend en option un fourreau ouvert continu de matières, un tube de fourreau, dans lequel le fourreau ouvert continu de matières est accumulé dans le tube de fourreau, un collier d'avancement du fourreau associé de manière opérationnelle à et positionné sous le tube de fourreau et configuré pour mettre en prise une partie du fourreau ouvert continu de matières pour avancer une longueur définie de fourreau ouvert continu de matières depuis le tube de fourreau ; un système d'étanchéité supérieur ; un système d'étanchéité inférieur ; et un couteau, dans lequel le système d'étanchéité supérieur, le système d'étanchéité inférieur, et le couteau sont en association opérationnelle avec et positionnés au-dessus du collier d'avancement du fourreau, et dans lequel le système d'étanchéité supérieur est positionné sous le système d'étanchéité inférieur et le couteau se situe entre le système d'étanchéité supérieur et le système d'étanchéité inférieur, et dans lequel le système d'étanchéité supérieur, le système d'étanchéité inférieur, et le couteau comprennent un assemblage, dans lequel ledit logement comprend en outre en option un couvercle, dans lequel le couvercle donne accès à l'ouverture au niveau de la partie supérieure du tuyau d'admission, ou ledit logement comprend en outre en option un logement de réceptacle de déchets solides, dans lequel le réceptacle de déchets solides est logé dans celui-ci, ou ledit logement comprend en outre en option un conteneur de déchets liquides raccordé par voie fluide au conduit de décharge de déchets liquides dans lequel ledit conteneur de déchets liquides comprend en option un indicateur de niveau de liquide.
